# EUROPÄISCHE PATENTSCHRIFT

(11) **EP 2 159 333 B1**
(45) Veröffentlichungstag und Bekanntmachung des Hinweises auf die Patenterteilung: **23.11.2011**
(21) Anmeldenummer: 09167171.9
(22) Anmeldetag: 04.08.2009
(51) Int. Cl.: E02F 3/36, F16L 37/56, E02F 9/22

(54) **Energieträgerkupplung, sowie Kupplung mit Energieträgerkupplung**
Energy carrier coupling and coupling with an energy carrier coupling
Accouplement pour support d'énergie et accouplement doté d'un accouplement pour support d'énergie

(30) Priorität: 25.08.2008 CH 13572008
(43) Veröffentlichungstag der Anmeldung: 03.03.2010
(73) Patentinhaber: Martin Holding GmbH, 6751 Braz (AT)
(72) Erfinder: Dietmar, Martin, 6751, Braz (AT)
(74) Vertreter: Hasler, Erich

(56) Entgegenhaltungen:
- EP-A- 1 365 074
- EP-A- 1 950 485
- WO-A-97/17564
- DE-A1- 19 938 876
- DE-A1-102004 014 824
- DE-C1- 19 751 292
- DE-T2- 60 102 711
- JP-A- 8 049 253

## Beschreibung

### Gebiet der Erfindung

Die Erfindung betrifft eine Energieträgerkupplung zum Kuppeln zweier miteinander zusammenwirkender Energiekupplungselemente aufweisende Energiekupplungsteile gemäss Oberbegriff des Anspruchs 1 sowie eine Kupplung für den Anbau von Arbeitsgeräten an eine Arbeitsmaschine mit einer Energieträgerkupplung.

### Stand der Technik

Kupplungen werden insbesondere bei schweren Arbeitsmaschinen, wie Baggern, Raupen oder Landwirtschaftsgeräten verwendet, an denen Anbaugeräte wie Baggerschaufeln bzw. - löffel, Hammer, Rüttelplatten u. dgl. befestigt werden müssen, wobei an den Anbaugeräten Aktuatoren vorgesehen sind, die mit Energie zu versorgen sind. Häufig handelt es sich bei dieser Energieversorgung um Hydraulikleitungen. Manchmal sind aber auch andere Energieversorgungen wie z. B. elektrische Kabel oder pneumatische Leitungen mittels der Energiekupplungsteile zu verbinden. Meist werden die Anbaugeräte mit einem beweglichen Arm der Arbeitsmaschine verbunden.

Beim Stand der Technik ist es bekannt, die beiden Hauptkupplungsteile über eine Schwenkbewegung in eine Verriegelungsstellung zu bringen, in der dann über einen Aktuator, welcher an einem der Hauptkupplungsteile angebracht ist, eine Verriegelungseinrichtung in die Schließstellung gebracht wird, wodurch die mechanische Verbindung der Hauptkupplungsteile und damit des Anbaugerätes an der Arbeitsmaschine vollzogen ist. Um die Energiekupplungsteile nicht anschließend per Hand miteinander verbinden zu müssen, ist es ebenfalls bekannt, Verbindungseinrichtungen vorzusehen, die das automatisierte, also nicht von Hand zu vollziehende, Verbinden der Energiekupplungsteile ermöglichen. Diese Verbindungseinrichtungen werden beim Stand der Technik entweder mit eigenen Aktuatoren ausgeführt oder beim Zusammenfügen der Hauptkupplungsteile mittels des Armes der Arbeitsmaschine automatisch in Kontakt gebracht.

Die DE 601 02 711 T2 zeigt eine mechanisch aufwendige und auch platzaufwendige Lösung zur Kupplung für Medien an einem Baugerät. Die horizontale Bewegung eines Zylinders lenkt Stangen zur Verriegelung einer Schnellkupplungsvorrichtung zwischen einem Geräteträger und einem Anbaugerät an. Die Bewegung des Zylinders wird auch dazu genutzt, die vertikale Bewegung eines Gehäuses anzulenken, indem durch keilförmige Kulissenführungen in denen Stifte geführt sind, eine Übersetzung hergestellt wird. In dem Gehäuse sind Hydraulikverbindungen aufgenommen, welche mit feststehenden an dem Anbaugerät angeordneten Hydraulikverbindungen durch die vertikale Bewegung des Gehäuses fluiddicht gekuppelt werden.

Die DE 10 2004 014 824 A1 zeigt eine gattungsgemäße Kupplung bei der ein Anschlusskörper starr an dem ersten Hauptkupplungsteil befestigt ist und der andere Anschlusskörper unter Verformung von Federgummis schwenkbar am zweiten Hauptkupplungsteil gehalten ist. Bei den Federgummis besteht die Gefahr, dass diese in Folge von Alterung ihre Elastizität einbüßen und die Energiekupplungselemente dann nicht mehr sicher schließen. Die Verriegelungseinrichtung und die Verbindungseinrichtung sind bei dieser Kupplung einstückig in Form eines Verriegelungszapfens ausgebildet.

Die EP 1365 074 beschreibt eine Vorrichtung zur Kupplung der einerseits an einem Tragfahrzeug, insbesondere einem Traktor, und andererseits an einem dem Tragfahrzeug zugeordneten Ladegerät angeordneten Kupplungselemente, insbesondere Kupplungsplatten, für das hydraulische System zur Betätigung des Ladegerätes. Dem am Tragfahrzeug fest angeordneten Kupplungselement ist ein annähernd vertikal verstellbares Stellelement zugeordnet. Das Stellelement hat einen Fanghaken für das am Ladegerät angeordnete Kupplungselement ausgebildet. Am Ladegerät ist ein um eine zumindest angenähert horizontale Achse schwenkbarer Schwingarm vorgesehen. An dem Schwingarm ist ein Träger für das am Ladegerät angeordnete Kupplungselement in angenähert vertikaler Richtung verschiebbar geführt. Das am Tragfahrzeug fest angeordnete Kupplungselement ist mit einem verschenkbaren Verschlussdeckel geschützt. Der Verschlussdeckel ist über das Stellelement angelenkt, wodurch dieser entsprechend der Position des Stellelements verschwenkt wird.

### Aufgabe der Erfindung

Es ist Aufgabe der vorliegenden Erfindung, eine Energieträgerkupplung für Energiekupplungselemente bereitzustellen, die nicht verschmutzungsanfällig ist. Ziel ist es auch, eine verschmutzungsunanfällige Energieträgerkupplung vorzuschlagen, die robust ist und kostengünstig herstellbar ist. Noch ein Ziel ist es, eine Kupplung zur Kupplung von Anbaugeräten für Arbeitsmaschinen, insbesondere für Bagger, vorzuschlagen, welche mit einer verschmutzungsunanfälligen Energieträgerkupplung ausgestattet ist.

### Beschreibung

Erfindungsgemäss wird die Aufgabe bei einer Energieträgerkupplung gemäss Oberbegriff von Anspruch 1 dadurch gelöst, dass am ersten Energiekupplungsteil ein Schutzelement lageveränderlich angeordnet ist, welches in der ersten Position des Energiekupplungsteils die ersten Energiekupplungselemente abdeckt, falls das zweite Energiekupplungsteil nicht angekoppelt ist, und in der zweiten Position des Energiekupplungsteils sich in einer Offenstellung befindet. Die erfindungsgemässe Energieträgerkupplung hat den Vorteil, dass die ersten Energiekupplungselemente dann, wenn diese nicht mit den zweiten Energiekupplungselementen gekoppelt sind, durch das Schutzelement, z.B. in Gestalt eines Schutzkappe, geschützt sind. Obwohl für die Betätigung des Schutzelements grundsätzlich ein separater Antrieb vorgesehen sein kann, ist zur Verschiebung oder Verschwenkung des Schutzelements bevorzugt eine Zwangsführung vorgesehen.

In einer vorteilhaften Ausführungsform ist das Schutzelement um eine Drehachse verschwenkbar am ersten Energiekupplungsteil angeordnet. Dies ist eine mit geringem Aufwand zu realisierende Lösung. Vorteilhaft ist eine Zwangsführung des Schutzelements vorgesehen, die bewirkt, dass das Schutzelement beim Verschieben des ersten Energiekupplungsteils von der ersten in die zweite Position verschwenkt oder verschoben wird. Eine solche Zwangsführung kann durch Zusammenwirken von Teilen des Schutzelements mit stationären Teilen des ersten Bauteils realisiert sein.

Gemäss einer bevorzugten Ausführungsform ist vorgesehen, dass das Schutzelement durch ein Federmittel in der ersten Position vorgespannt ist. Dies hat den Vorteil, dass die Zwangsführung nur das Verschwenken des Schutzelements in die Offenposition bewirken muss. Wenn die Energiekupplungsteile miteinander gekoppelt sind, kann das Schutzelement am zweiten Energiekupplungsteil anliegen.

Vorteilhaft ist die Zwangsführung durch am ersten Bauteil und am Schutzelement ausgebildete Führungsflächen gebildet. Dies ist eine einfache robuste Ausführungsform. Zweckmässigerweise besitzt das Bauteil zwei voneinander beabstandete Seitenteile, zwischen welchen das erste Energiekupplungsteil längsverschieblich geführt ist. In diesem Fall kann die Zwangsführung durch Zusammenwirken von Teilen des beweglichen Schutzelements mit den stationären Seitenteilen zustande kommen. Insbesondere ist es vorteilhaft, wenn an den stationären Seitenteilen Führungsflächen ausgebildet sind, welche mit entsprechenden Führungsflächen des Schutzelements zusammenwirken.

Zum Verschieben des ersten Energiekupplungsteils ist vorzugsweise ein Aktuator vorgesehen, um dasselbe von der ersten in die zweite Position zu verschieben, und vice versa. Durch Verschieben des ersten Energiekupplungsteils werden die an den Energiekupplungsteilen vorhandenen Anschlussplatten in Anlage zueinander gebracht, sodass eine Verbindung der Energiekupplungselemente möglich ist.

Gegenstand der vorliegenden Erfindung ist auch eine Kupplung für den Anbau von Arbeitsgeräten an eine Arbeitsmaschine mit einer Energieträgerkupplung, wie Bagger, mit einer Energieträgerkupplung gemäss einem der Ansprüche 1 bis 9. Eine solche Kupplung besitzt ein erstes Hauptkupplungsteil, an welchem das erste Energiekupplungsteil angeordnet ist,
- ein zweites Hauptkupplungsteil, an welchem das zweite Energiekupplungsteil angeordnet ist, und
- einen Aktuator zum Verschieben des ersten Energiekupplungsteils.

Das Vorsehen einer erfindungsgemässen Energieträgerkupplung an einer Kupplung für Anbaugeräte hat den Vorteil, dass das Anbaugerät weitere Funktionen ausüben kann. Eine Baggerschaufel kann dann beispielsweise auch eine Kippbewegung ausführen.

Vorteilhaft treibt der Aktuator ein bewegliches Schiebeteil an, welches mit dem ersten Energiekupplungsteil mechanisch in Verbindung steht. Dies hat den Vorteil, dass beim mechanischen Ankuppeln des Anbaugerätes simultan eine Verschiebung des ersten Energiekupplungsteils bewirkt wird. Dies bedeutet, dass kein zusätzlicher Antrieb benötigt wird. Auch wenn die die Verschieberichtung des Energiekupplungsteils grundsätzlich parallel zur Bewegung des Aktuators erfolgen kann, ist es bevorzugt, wenn die Verschieberichtung des Energiekupplungsteils in einem Winkel > 0 und < 180 Grad zur Verschieberichtung des Schiebeteils erfolgt.

Gemäss einer bevorzugten Ausführungsform umfasst das erste Hauptkupplungsteil zwei in Abstand voneinander angeordnete Seitenteile, an denen auf einer Seite eine Bolzenaufnahme für einen ersten Bolzen ausgebildet ist. Ausserdem ist zwischen dem durch die Seitenteile definierten Raum der Aktuator angeordnet, welcher eine bewegliche Verriegelungseinrichtung antreibt, die in Eingriff mit einem zweiten Bolzen gebracht werden kann. Zweckmässigerweise ist das Schiebeteil mit der beweglichen Verriegelungseinrichtung verbunden. Vorzugsweise ist das Schiebeteil als Schiebekeil ausgebildet ist, welcher mit einer Führungsfläche der ersten Anschlussplatte zur Erzeugung einer zwangsgeführten Bewegung zusammenwirkt.

Die Erfindung wird nachfolgend unter Bezugnahme auf die Figuren beispielhaft beschrieben. Es zeigt:
- Fig. 1: eine Kupplung für die lösbare Verbindung von ersten und zweiten Hauptkupplungsteilen mit einer angebauten Energieträgerkupplung für Energiekupplungselemente vor dem Aufeinanderzuschwenken der Hauptkupplungsteile;
- Fig. 2: die Kupplung in der Verriegelungsstellung vor Betätigung des Aktuators, und
- Fig. 3: die Kupplung in der endgültig verriegelten Stellung;
- Fig. 4: eine perspektivische Unteransicht des ersten Hauptkupplungsteils mit aufgeklapptem Schutzelement und sichtbaren Energiekupplungselemenien;
- Fig. 5: eine perspektivische Unteransicht des ersten Hauptkupplungsteils, bei welchem die Energiekupplungselemente durch das Schutzelement geschützt sind;
- Fig. 6: eine perspektivische Draufsicht auf das erste Hauptkupplungsteil;
- Fig. 7: schematisch und im Längsschnitt die Hauptkupplungsteile wie in Figur 2 in der Verriegelungsstellung vor Betätigung des Aktuators;
- Fig. 8: schematisch und im Längsschnitt die Hauptkupplungsteile von Figur 7 nach der Betätigung des Aktuators.

Die in den Fig. dargestellte Kupplung umfasst einen ersten Hauptkupptungsteil 1 und einen weiteren Hauptkupplungsteil 2 zur Befestigung eines Anbaugerätes 4 (z. B. in Form eines Baggerlöffels) an einem Hydraulikarm 3 einer Arbeitsmaschine. Die beiden Hauptkupplungsteile 1, 2 können dabei jeweils fix z. B. durch Anschweißen an der Arbeitsmaschine und am Anbaugerät 4 befestigt sein. Günstiger ist es jedoch, wenn die Hauptkupplungsteile 1 und 2 am Anbaugerät 4 und/oder an der Arbeitsmaschine bzw. deren Arm 3 z. B. durch Verschrauben auswechselbar befestigbar sind.

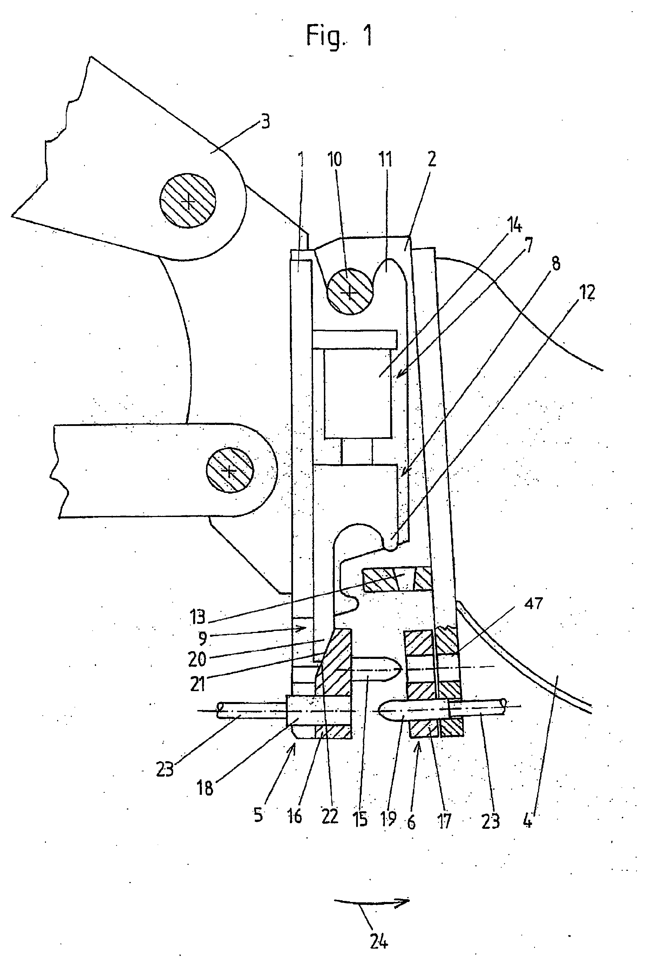

In der in Fig. 1 dargestellten Stellung hintergreift die hier am ersten Hauptkupplungsteil 1 angeordnete Aufnahmeklaue 11 bereits den hier am weiteren Hauptkupplungsteil 2 angeordneten Bolzen 10b. Diese Stellung kann zum einen erreicht werden, indem das Anbaugerät 4 mit seinem Bolzen 10 in die Aufnahmeklaue 11 hineingelegt wird. Vor allem bei schwereren Anbaugeräten wird man aber in der Regel mit Hilfe des Antriebs des Armes 3 den Bolzen 10 des Anbaugerätes 4 entsprechend mit der Aufnahmeklaue 11 hintergreifen.

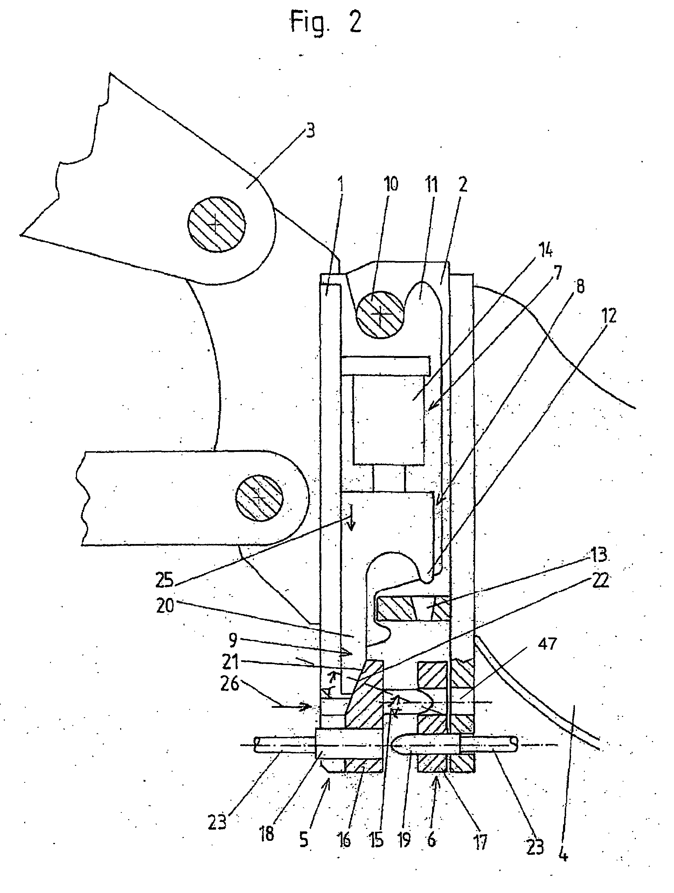

In der in Fig. 1 gezeigten Stellung sind weder der Verriegelungszapfen 12 und die Verriegelungsaufnahme 13 der Verriegelungseinrichtung 8 noch die Energiekupplungsteile 5 und 6 miteinander in Eingriff. Aus der in Fig. 1 gezeigten Stellung werden bei diesem Ausführungsbeispiel die beiden Hauptkupplungsteile 1 und 2 zunächst in Richtung 24 in die in Fig. 2 gezeigte Verriegelungsstellung geschwenkt, wobei der Bolzen 10 als Drehachse dient. Auch wenn dies ein günstiges Ausführungsbeispiel ist, muss für die Erfindung nicht zwingend vorgesehen sein, dass die beiden Hauptkupplungsteile 1 und 2 mittels einer Schwenkbewegung in die Verriegelungsstellung gebracht werden müssen. Bei entsprechender Ausbildung der Aufnahmeklaue 11 kann durchaus auch vorgesehen sein, dass der erste Hauptkupplungsteil 1 mittels des Armes 3 in einer Linearbewegung auf den weiteren Hauptkupplungsteil 2 des Aufnahmegerätes 4 aufgeschoben wird.

In der in Fig. 2 gezeigten Verriegelungsstellung ist es nun möglich, die Verriegelungseinrichtung 8 und die Verbindungseinrichtung 9 in ihre jeweilige Schließstellungen zu bringen. Bevor dies erfolgt, sind weder die Energiekupplungsteile 5 und 6 noch der Verriegelungszapfen 12 und die Verriegelungsaufnahme 13 miteinander in Eingriff. Um nun sowohl die mechanische Verriegelung der Hauptkupplungsteile 1 und 2 miteinander vorzunehmen, als auch die Energiekupplungsteile 5 und 6 miteinander zu verbinden, ist nun vorgesehen, dass der gemeinsame Aktuator 7 sowohl die Verriegelungseinrichtung 8 als auch die Verbindungseinrichtung 9 betätigt. Im gezeigten Ausführungsbeispiel führen beide Einrichtungen jeweils eine Linearbewegung aus. Soweit dies die Verriegelungseinrichtung 8 betrifft, wird dabei der Verriegelungszapfen 12 in Richtung 25 in die Verriegelungsaufnahme 13 eingeschoben. Gleichzeitig wird der mit dem Verriegelungszapfen 12 und dem Aktuator 7 zwangsgekoppelte -weil fix daran befestigte - Schiebekeil 20 ebenfalls in Richtung 25 verschoben, wodurch seine Keilfläche 21 an der hier entsprechend keilförmig ausgeführten Führungsfläche 22 entlang geschoben wird. Dies führt dazu, dass die Führungsfläche 22 tragende Anschlussplatte 16 des ersten Energiekupplungsteiles 5 in Richtung 26 auf die in diesem Ausführungsbeispiel starr am zweiten Hauptkupplungsteil 2 angeordnete zweite Anschlussplatte 17 geschoben wird. Im gezeigten Ausführungsbeispiel sind die Keilflächen 21, 22 in der Art ausgeführt, dass die Bewegungsrichtungen 25 und 26 rechtwinkelig zueinander ausgerichtet sind. Dies ist aber nicht zwingend so vorzusehen. Auch andere Winkel zwischen den Bewegungsrichtungen 25 und 26 sind möglich. Es sind auch Ausführungsbeispiele denkbar, bei denen zur Verriegelung der Hauptkupplungsteile 1 und 2 und der Energiekupplungsteile 5 und 6 nicht rein lineare sondern auch rotatorische oder lineare und rotatorische Bewegung zu vollziehen sind.

Wie den Fig. 1 bis 3 zu entnehmen ist, handelt es sich beim Verriegelungszapfen 12 und der Keilfläche 21 des Schiebekeils 20 um zwei separate Bauteile, welche voneinander beabstandet sind, aber wie im hier gezeigten Ausführungsbeispiel realisiert, günstigerweise zwangsgekoppelt ausgeführt sind. Im gezeigten Ausführungsbeispiel wird dies dadurch erreicht, dass sie einstückig an einem gemeinsamen Träger angeordnet sind, sodass sie, wie oben dargelegt, synchron und parallel zueinander vom Aktuator 7 in Richtung 25 und in die Gegenrichtung verschoben werden können. Im Sinn einer möglichst kompakten Bauweise ist es günstig, wenn die Keilfläche 21 und der Verriegelungszapfen 12, wie im gezeigten Ausführungsbeispiel realisiert, in Richtung ihrer gemeinsamen Verschiebung 25 voneinander beabstandet sind. Besonders bevorzugt steht wie in den Fig. 1 bis 3 dargestellt, der Schiebekeil 20 bzw. die Keilfläche 21 in Richtung 25 über dem Verriegelungszapfen 12. Es ist aber auch eine umgekehrte Anordnung denkbar. Zur Führung der Anschlussplatte 16 in Richtung 26 können zusätzlich zum Führungszapfen 15 noch schienenartige Führungen oder dgl. am ersten Hauptkupplungsteil 1 vorgesehen sein, die eine vorzugsweise lineare Zwangsführung der Anschlussplatte 16 bei ihrem Verschieben relativ zum ersten Hauptkupplungsteil 1 in Richtung 26 und/oder in die Gegenrichtung bewirken. Die zweite Anschlussplatte 17 kann fix am zweiten Hauptkupplungsteil 2 angeordnet sein. Denkbar ist es auch, den Führungszapfen 15 am zweiten Hauptkupplungsteil 2 vorzusehen. Diese Anordnung hat den Vorteil, dass die Gefahr, dass der Führungszapfen 15 beschädigt (deformiert) wird, verringert ist, weil die Führungszapfen 15 im angekuppelten Zustand, d.h. wenn dass Anbaugerät im Einsatz ist, von der Füluungszapfenaufnahme 47 geschützt sind. Im abgekuppelten Zustand befindet sich das Anbaugerät nicht im Einsatz und die Gefahr einer Beschädigung des Führungszapfens 15 ist bei sorgfältiger Lagerung sehr gering.

Um in dem gezeigten Beispiel das rein lineare Aufeinanderzubewegen der Energiekupplungsteile 5 und 6 bzw. ihrer Anschlussplatten 16 und 17 zu gewährleisten, ist eine Linearführung in Form des Führungszapfens 15 vorgesehen. Dieser sorgt dafür, dass das männliche Energiekupplungselement 19 exakt in das weibliche Energiekupplungselement 18 eindringt, sodass insbesondere bei hydraulischen oder pneumatischen Energiekupplungsteilen ein fluiddichter Sitz erzeugt wird. Das Bezugszeichen 23 zeigt beispielhaft die zu verbindenden Hydraulik bzw. Pneumatikschläuche. Es können anstelle dessen aber natürlich auch elektrische, optische oder sonstige Kabel miteinander zu verbinden sein. An der Ausführung der Kupplung ändert dies nichts. Auch die Anzahl der miteinander zu verbindenden Energiekupplungselemente 18 und 19 kann variieren. Darüber hinaus können die männlichen und/oder weiblichen Energiekupplungselemente 18,19 natürlich jeweils an der Anschlussplatte 16 oder an dem Anschlussplatte 17 angeordnet sein. Hier sind beliebig viele verschiedene Ausführungen möglich. Wichtig ist nur, dass die männlichen und weiblichen Energiekupplungselemente 18,19 so angeordnet sind, dass sie durch ein Aufeinanderzubewegen der Anschlussplatten 16 und 17 miteinander in Verbindung bringbar sind. Günstig ist jedenfalls, wenn die Energiekupplungsteile 5, 6 in Form von Steckverbindungen ausgeführt sind, da diese besonders einfach verbindbar sind.

Im gezeigten Ausführungsbeispiel ist der Aktuator 7 in Form einer hydraulischen Kolben-Zylinder-Einheit 14 ausgeführt. Dies muss aber nicht so sein. Der Aktuator 7 kann auch pneumatisch, elektrisch oder auf andere Weise wie z. B. magnetisch angetrieben sein.

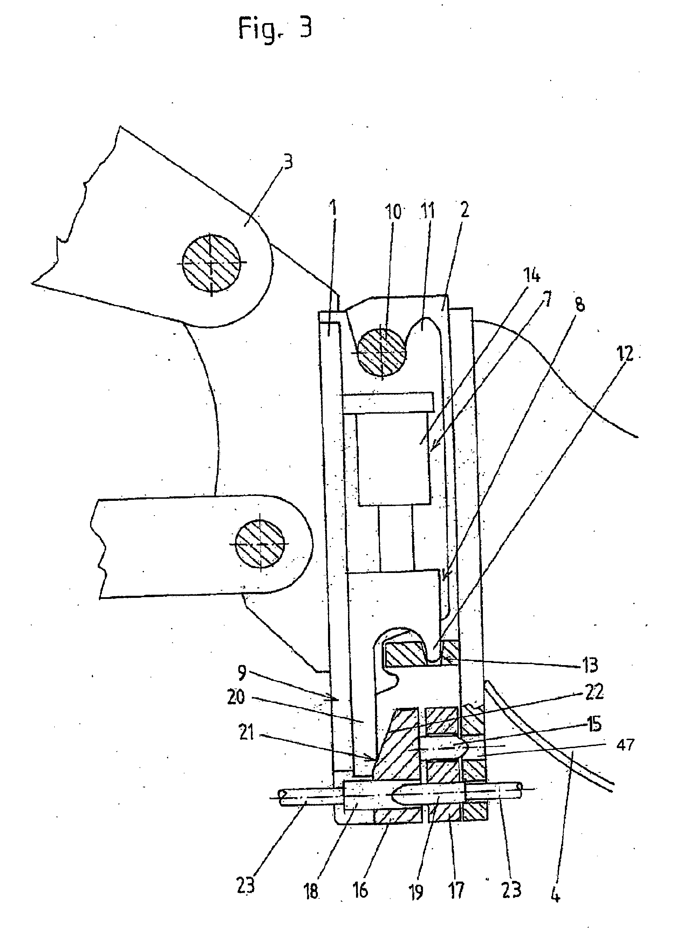

Fig. 3 zeigt die endgültig verriegelte Stellung, in der der Verriegelungszapfen 12 hier formschlüssig in die Verriegelungsaufnahme 13 eingreift, womit eine spielfreie mechanische Verbindung zwischen dem ersten Hauptkupplungsteil 1 und dem weiteren Hauptkupplungsteil 2 sichergestellt ist. In dieser Stellung sind die Energiekupplungsteile 5 und 6 ebenfalls miteinander gekoppelt, wobei die männlichen Energiekupplungselemente 19 gegebenenfalls fluiddicht in den weiblichen Energiekupplungselementen 18 ruhen, womit die Verbindung der beiden Energiekupplungsteile 5 und 6 hergestellt ist.

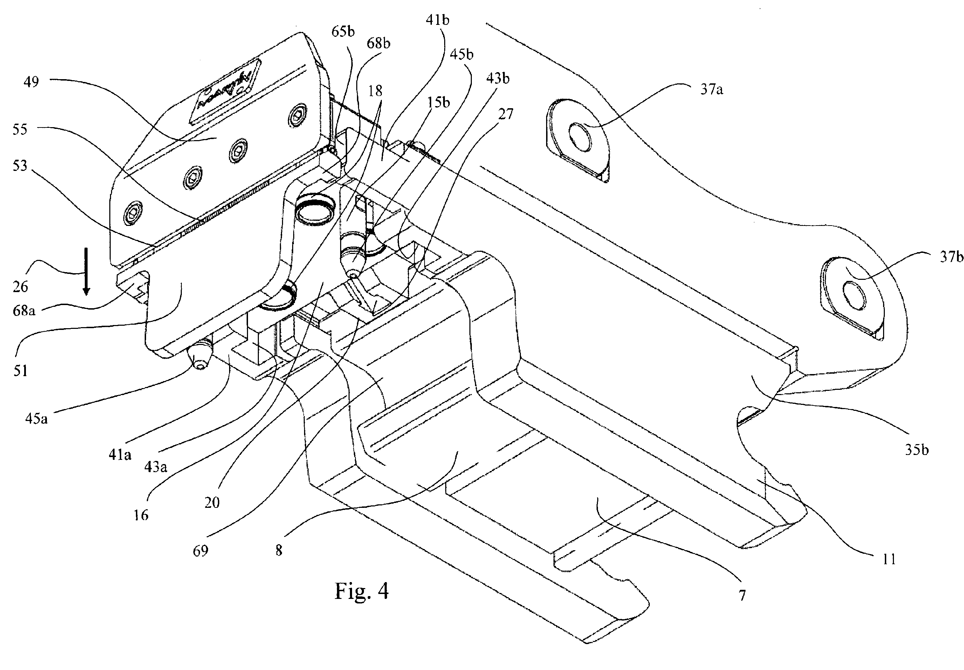

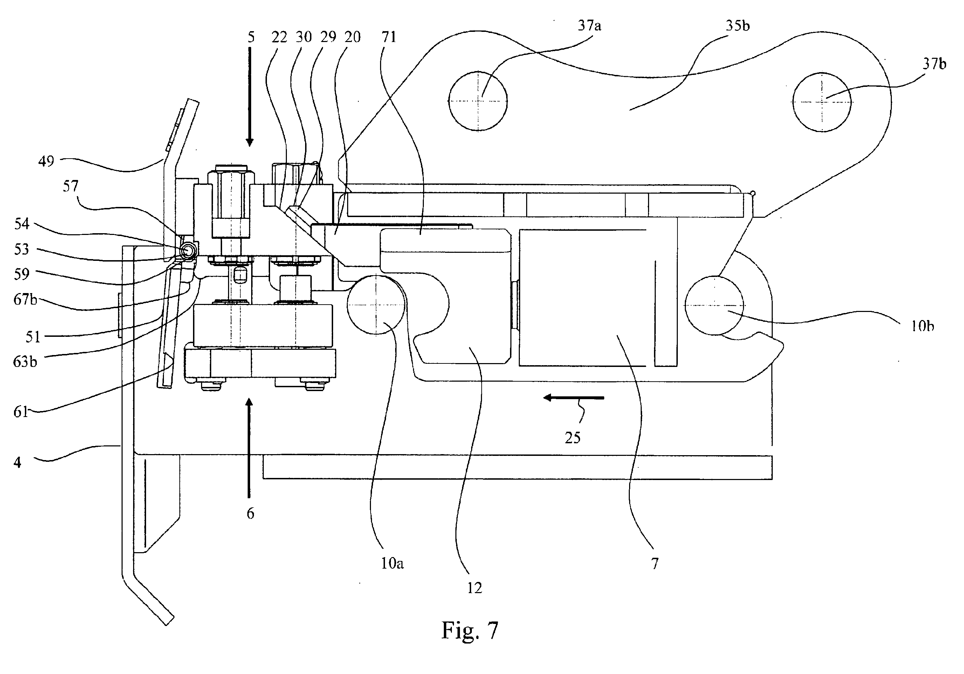

Fig. 4 bis 7 zeigen ein Ausführungsbeispiel der Kupplung bei der anstatt des Verriegelungszapfens 12 ein Bolzen 10a seine Verwendung findet. Das Entriegeln und Trennen der Energiekupplungsteile 5 und 6 und der Hauptkupplungsteile 1 und 2 erfolgt in entgegengesetzter Reihenfolge und kann ebenfalls vollständig automatisiert, also ohne zusätzliche Handarbeit ausgeführt werden. Zum Beispiel kann hierzu eine Zwangskopplung der Anschlussplatte 16 mit dem Schiebekeil 20 vorgesehen sein, welche es erlaubt, dass beim Zurückziehen des Schiebekeils 20 entgegen der Richtung 25 die Anschlussplatte 16 zwangsgekoppelt entgegen der Richtung 26 von der Anschlussplatte 17 abgezogen werden. In diesem Ausführungsbeispiel ist zur Zwangskopplung beim Abziehen der Anschlussplatte 16 von der Anschlussplatte 17 ein in eine hinterschnittene Nut 27 (Fig. 4) eingreifender Kopf 29 (Fig. 7) mit Hinterschneidungen 30 vorgesehen. Die Hinterschneidungen 30 dieses Kopfes 29 liegen an Gleitflächen der hinterschnittenen Nut 27 an. Die Schultern 30, wie auch die Gleitflächen verlaufen günstigerweise parallel zur Keilfläche 21 und zur Führungsfläche 22, sodass der Kopf 29 in der hinterschnittenen Nut 27 parallel zur Keilfläche 21 und zur Führungsfläche 22 verschoben werden kann. Im gezeigten Ausführungsbeispiel ist die hinterschnittene Nut 27 in den Schiebekeil 20 eingefräst, und der Kopf 29 über den Hals an der Anschlussplatte 16 befestigt bzw. einstückig angeformt. Dies muss aber nicht so sein, es ist genauso gut möglich, einen entsprechenden Kopf mit Hals am Schiebekeil 20 vorzusehen, und die hinterschnittene Nut 27 in der Anschlussplatte 16 anzuordnen.

Durch diese Anordnung wird gewährleistet, dass durch Zusammenwirken der Schulter 30 und der Gleitflächen der Nut 27, die Anschlussplatte 16 von der Anschlussplatte 17 abgezogen wird, sobald der Schiebekeil 20 entgegen der Richtung 25 zurückgezogen wird. Dies führt zum Trennen der weiblichen und männlichen Energiekupplungselemente 18 und 19. Wie bereits ausgeführt, ist dies aber nur eine Möglichkeit zur Trennung der Energiekupplungselemente 18 und 19. Es ist genauso gut möglich, die Anschlussplatten 16 und 17 mittels anderer Maßnahmen wieder voneinander zu trennen. Hierfür könnten z.B. entsprechend hydraulisch oder elektrisch angetriebene Stifte in einer der Anschlussplatten 16 oder 17 vorgesehen sein, die bei entsprechender Betätigung die Anschlussplatten 16 und 17 voneinander weg schieben und damit trennen.

Im gezeigten Ausführungsbeispiel ist der Aktuator 7 am ersten Hauptkupplungsteil 1 und damit am Arm 3 der Arbeitsmaschine angeordnet. Dies ist günstig, da in der Regel die Energieversorgung von der Arbeitsmaschine über den Arm 3 geliefert wird. Trotzdem ist die Erfindung nicht auf diese Variante eingeschränkt. Die Frage, welche der Bauteile nun am Anbaugerät 4 und welche am Arm 3 bzw. an der Arbeitsmaschine selbst anzuordnen sind, unterliegt vielmehr dem Belieben des Fachmanns. Alternative Anordnungen können insbesondere dann interessant werden, wenn die Energieversorgung nicht mehr über die Arbeitsmaschine, sondern über eine anderweitige Energiequelle erfolgt.

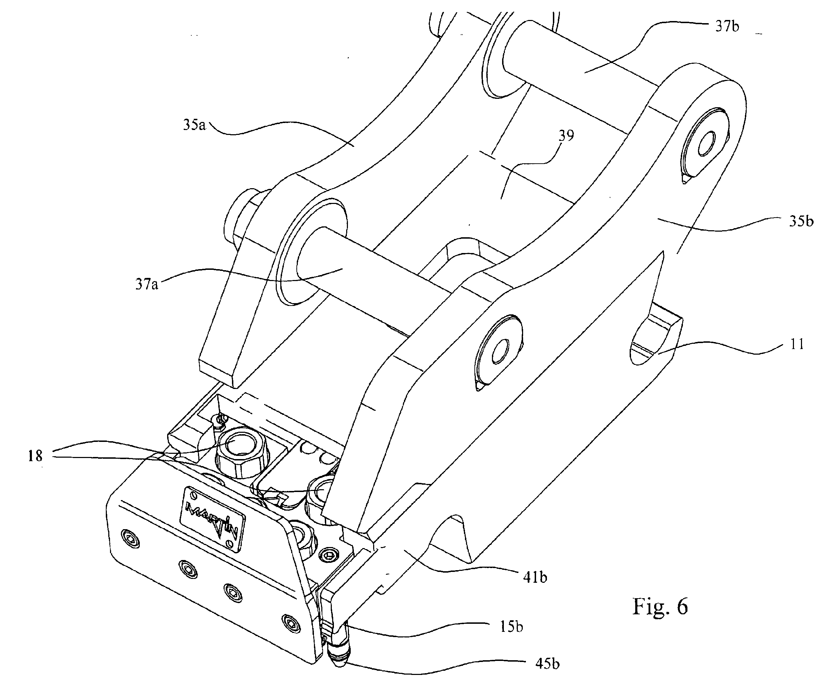

Das in den Figuren 4 bis 7 gezeigte erste Hauptkupplungsteil besitzt zwei beabstandete Seitenteile 35a, 35b, welche durch Bolzen 37a, 37b und eine Montageplatte 39 verbunden sind. Zwischen den Seitenteilen 35a, 35b und unterhalb der Montageplatte 39 sind der Aktuator 7 und die Verriegelungseinrichtung 8 angeordnet (Fig. 6). Auf der der Klaue 11 entgegengesetzten Seite der Seitenteile 35a, 35b ist das erste Energiekupplungsteil 5 zwischen zwei verlängerten Armen 41a, 41b der Seitenteile 35a, 35b angeordnet. Das Energiekupplungsteil 5 ist in Führungsnuten 43a, 43b der Seitenteile 35a, 35b längsverschieblich geführt (Pfeil 26). Das Energiekupplungsteil 5 besitzt eine erste Anschlussplatte 16, in welcher mehrere weibliche Energiekupplungselemente 18 in Abstand voneinander montiert sind. Zwecks Vereinfachung der Zeichnung sind in Figur 6 die Verbindungsleitungen zu den Energiekupplungselementen 18 nicht gezeigt. Einander gegenüberliegend sind am Energiekupplungsteil zwei Führungszapfen 15a,15b vorgesehen. Wie oben ausgeführt, ist es auch denkbar, die Führungszapfen 15a,15b am zweiten Energiekupplungsteil 6 anzuordnen. Die Führungszapfen 15a, 15b besitzen konische Köpfe 45a und 45b, welche das Einführen in eine entsprechende Führungszapfenaufnahme 47 (Fig. 1 bis 3) ermöglicht, auch wenn das erste und zweite Hauptkupplungsteile 1,2 nicht exakt zueinander ausgerichtet sind.

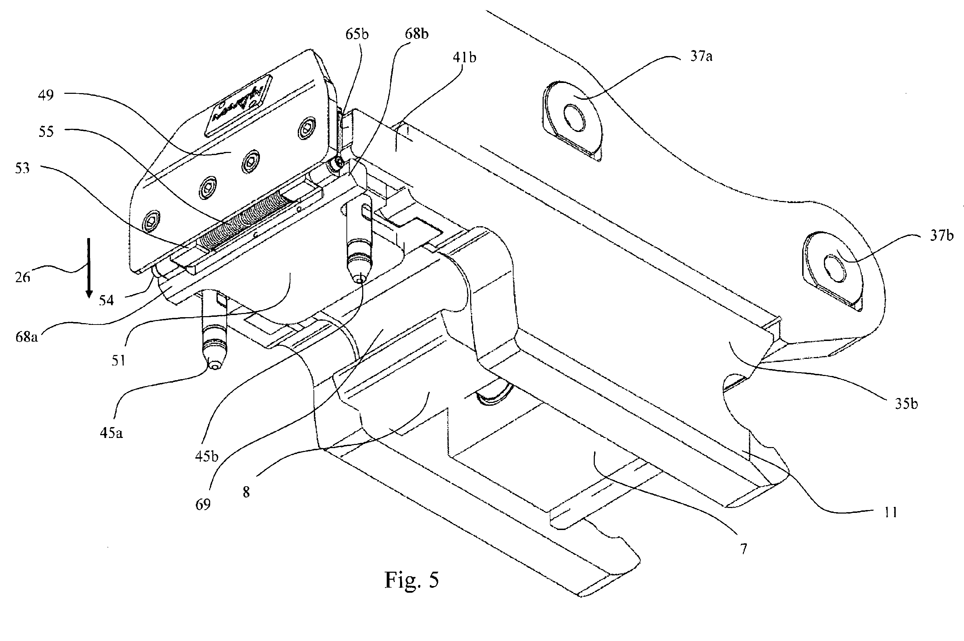

Auf der Stirnseite des ersten Energiekupplungsteils 5 ist eine Schutzplatte 49 fix befestigt, welche die Anschlüsse der Hydraulikschläuche vor Beschädigungen schützen soll. Unterhalb der Schutzplatte 49 ist ein Schutzdeckel 51 mittels eines Scharniers oder einer Achse 53 am ersten Energiekupplungsteil 5 angelenkt (Drehachse 54). Eine Schenkelfeder 55, deren einer Schenkel 57 am Energiekupplungsteil 5 und deren anderer Schenkel 59 am Schutzdeckel 53 angreift (Fig. 5), spannt die Schutzplatte 53 in eine Geschlossenposition vor, in welcher diese die Energiekupplungsteile 18 abdeckt (Figuren 7 und 5). Der Schutzdeckel 51 besitzt auf der den Energiekupplungselementen 18 zugewandten Seite Ausfräsungen 61, die der Aufnahme der aus der Anschlussplatte 16 vorstehenden Teile der Energiekupplungselemente 18 dienen. Alternativ kann der Schutzdeckel 51 eine einzige grosse Ausnehmung besitzen, welche sich bis zu den Deckelrändern erstreckt. Die Schutzplatte 51 befindet sich daher, wenn kein Anbaugerät 4 angekuppelt ist, in einer Offenposition. Wird nun ein Anbaugerät angekuppelt so verschwenkt die Schutzplatte in die Geschlossenposition, falls das Anbaugerät 4 keine Energieträgerkupplung besitzt. Dadurch sind die Energiekupplungselemente zuverlässig gegen Verschmutzungen geschützt. Ist das Anbaugerät jedoch mit einer Energiekupplung ausgestattet, so verschwenkt die Schutzplatte 51 nur bis zum Anschlag an das Anbaugerät 4.

Zum Aufklappen des Schutzdeckels 51 ist zwischen dem Schutzdeckel 51 und den Seitenteilen 35a, 35b eine Zwangsführung ausgebildet. Diese Zwangsführung ist realisiert einerseits durch kurvenförmige erste Führungsflächen 63a, 63b, welche an den Stirnseiten 65a, 65b der Arme 41a, 41b ausgebildet sind, und andererseits durch zweite Führungsflächen 67a, 67b, welche am Schutzdeckel 51 realisiert sind. Der Schutzdeckel besitzt zu diesem Zweck in kurzem Abstand zur Drehachse zwei seitliche Vorsprünge 68a, 68b, welche die Anschlagsfläche für die Führungsflächen 63 definieren.

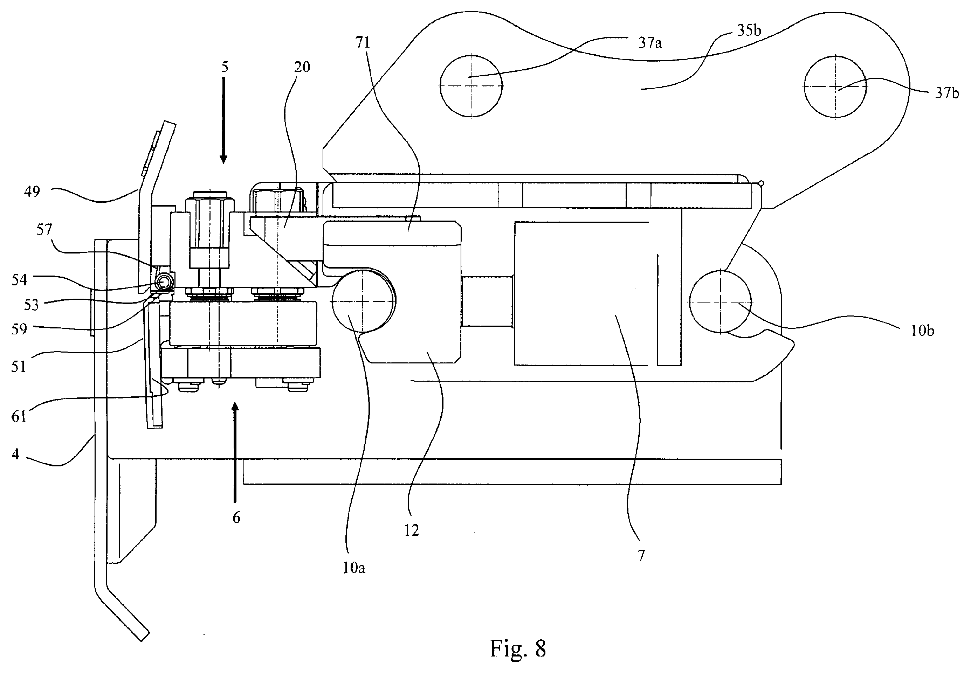

Durch eine Zusammenschau der Figuren 7 und 8 wird der Kupplungsvorgang nun näher im Detail beschrieben: In Figur 7 sind die Hauptkupplungsteile 1, 2 bereits zueinander ausgerichtet, und die Klaue 11 ist in Eingriff mit dem Bolzen 10b. Der Verriegelungszapfen 12 hingegen befindet sich in der zurückgezogenen Stellung, in welcher die Bolzenaufnahme 69 beabstandet zum Bolzen 10a des Anbaugeräts 4 ist. Das mit dem Verriegelungskörper 71 gekoppelte Verschiebeteil 20 befindet sich ebenfalls in der zurückgezogenen Position. Das Energiekupplungsteil 5 ist angehoben.

Beim Betätigen des Aktuators 7 wird der Verriegelungskörper 71 in Richtung des Pfeils 25 verschoben. Gleichzeitig wird durch das Zusammenwirken von Schiebeteil 20 und Führungsfläche 22 ein Absenken des Energiekupplungsteils 5 bewirkt. Durch die Anwesenheit des zweiten Energiekupplungsteils 6 kann sich der Schutzdeckel 51 jedoch nicht über die Energiekupplungselemente 18 legen, sondern lehnt sich an das zweite Energiekupplungsteil 6 unter Federvorspannung an (Figur 8).

Grundsätzlich denkbar ist, das Auf- und Zuklappen des Schutzdeckels 51 durch andere dem Fachmann bekannte Führungseinrichtungen wie Kullissenführungen und dergleichen zu bewirken. Die erfindungsgemässe Führungseinrichtung für das Energiekupplungsteil soll einzig bewirken, dass beim Anheben des Energiekupplungsteils der Schutzdeckel selbsttätig aufklappt und beim Absenken des Energiekupplungsteils selbsttätig zuklappt. Eine mechanische Kopplung mit dem Antrieb der Verriegelungseinrichtung 8 der Hauptkupplungsteile ist vorteilhaft, muss jedoch nicht zwingend vorgesehen sein. Die beschriebene Mechanik für das Anheben und Absenken des Energiekupplungsteils 5 kann auf unterschiedliche Arten realisiert sein. Die oben beschriebene Lösung ist lediglich ein mögliches Ausführungsbeispiel.

Grundsätzlich ist die Erfindung weder auf bestimmte Typen von Arbeitsmaschinen noch auf bestimmte Anbaugeräte beschränkt. Insbesondere ist aber die Verwendung bei schweren Arbeitsmaschinen, wie Baggern, Raupen oder Landwirtschaftsgeräten vorgesehen, an denen Anbaugeräte wie Baggerschaufeln bzw. -löffel, Greifer, Hammer, Rüttelplatten u. dgl. zu befestigen sind.

### Legende zu den Bezugsziffern

- 1 Erster Hauptkupplungsteil 2: Zweiter Hauptkupplungsteil
- 3: Arm der Arbeitsmaschine
- 4: Anbaugerät
- 5: Erster Energiekupplungsteil
- 6: Zweiter Energiekupplungsteil
- 7: Aktuator
- 8: Verriegelungseinrichtung
- 9: Verbindungseinrichtung
- 10a,10b: Bolzen des zweiten Hauptkupplungsteils
- 11: Aufnahmeklaue
- 12: Verriegelungszapfen
- 13: Verriegelungsaufnahme
- 14: Kolben-Zylinder-Einheit
- 15a,15b: Führungszapfen
- 16: Erste Anschlussplatte
- 17: Zweite Anschlussplatte
- 18: Weibliches Energiekupplungselement
- 19: Männliches Energiekupplungselement
- 20: Schiebeteil
- 21: Keilfläche
- 22: Führungsfläche
- 23: Energieversorgungsschlauch
- 24: Schwenkrichtung
- 25: Verriegelungsrichtung
- 26: Verbindungsrichtung
- 27: Hinterschnittene Nut
- 29: Kopf
- 30: Hinterschneidungen des Kopfes
- 35a, 35b: Seitenteile
- 37a, 37b: Bolzen des ersten Hauptkupplungsteils
- 39: Montageplatte
- 41a, 41b: Verlängerte Arme der Seitenteile 35a, 35b
- 43a,43b: Führungsnuten
- 45a, 45b: konischer Kopf des Führungszapfens
- 47: Führungszapfenaufnahme
- 49: Fixe Schutzplatte
- 51: Schutzelement (Schutzdeckel)
- 53: Scharnier oder Achse
- 54: Drehachse
- 55: Schenkelfeder
- 57: Erster Schenkel der Schenkelfeder
- 59: zweiter Schenkel der Schenkelfeder
- 61: Ausfräsung am Schutzdeckel 51
- 63a, 63b: kurvenförmig erste Führungsfläche an der Stirnseite der Arme 41a,41b
- 65a, 65b: Stirnseiten der Arme 41a,41b
- 67a, 67b: zweite Führungsflächen 67a,67b
- 68a, 68b: Seitliche Vorsprünge des Schutzdeckels
- 69: Bolzenaufnahme
- 71: Verriegelungskörper

## Patentansprüche

1. Energieträgerkupplung zum Kuppeln zweier Energiekupplungsteile, mit
- einem ersten Energiekupplungsteil (5), welches längsverschieblich zwischen einer ersten und einer zweiten Position an einem ersten Bauteil (1) angeordnet ist und eine erste Anschlussplatte (16) mit einem oder mehreren ersten Energiekupplungselementen (18) aufweist,
- einem zweiten Energiekupplungsteil (6), welches an einem zweiten Bauteil (4) angeordnet ist und eine zweite Anschlussplatte (17) mit einem oder mehreren zweiten Energiekupplungselementen (19) aufweist, welche mit den ersten Energiekupplungselementen(18) zusammenwirken können, falls das erste Energiekupplungsteil (5) in der ersten Position ist, und
miteinander zusammenwirkenden Führungs- und Zentriermitteln, welche an den Bauteilen (1, 4) und/ oder Anschlussplatten (16, 17) vorgesehen sind, um die Anschlussplatten (16,17) relativ zueinander auszurichten,
**dadurch gekennzeichnet,**
**dass** am ersten Energiekupplungsteil (5) ein Schutzelement (51) lageveränderlich angeordnet ist, welches in der ersten Position des Energiekupplungsteils (5) die ersten Energiekupplungselemente (18) abdeckt, falls das zweite Energiekupplungsteil (6) nicht angekoppelt ist, und in der zweiten Position des Energiekupplungsteils (5) sich in einer Offenstellung befindet.

2. Energieträgerkupplung nach Anspruch 1, **dadurch gekennzeichnet, dass** das Schutzelement (51) um eine Drehachse 54 verschwenkbar am ersten Energiekupplungsteil (5) angeordnet ist.

3. Energieträgerkupplung nach Anspruch 1 oder 2, **dadurch gekennzeichnet, dass** eine Zwangsführung des Schutzelements (51) vorgesehen ist, die bewirkt, dass das Schutzelement (51) beim Verschieben des ersten Energiekupplungsteils (5) von der ersten in die zweite Position verschwenkt oder verschoben wird.

4. Energieträgerkupplung nach einem der Ansprüche 1 bis 3, **dadurch gekennzeichnet, dass** das Schutzelement (51) durch ein Federmittel (55) in die erste Position vorgespannt ist.

5. Energieträgerkupplung nach Anspruch 3 oder 4, **dadurch gekennzeichnet, dass** die Zwangsführung durch am ersten Bauteil (1) und am Schutzelement (51) ausgebildete Führungsflächen (63a, 63b und 67a, 67b) gebildet ist.

6. Energieträgerkupplung nach einem der Ansprüche 1 bis 5, **dadurch gekennzeichnet, dass** das Bauteil zwei voneinander beabstandete Seitenteile (35a, 35b) besitzt, zwischen welchen das erste Energiekupplungsteil (5) längsverschieblich geführt ist.

7. Energieträgerkupplung nach Anspruch 6, **dadurch gekennzeichnet, dass** die Zwangsführung durch eine Lageveränderung des beweglichen Schutzelements (51) relativ zu den stationären Seitenteilen (35a, 35b) zustande kommt.

8. Energieträgerkupplung nach Anspruch 6 oder 7, **dadurch gekennzeichnet, dass** an den stationären Seitenteilen (35a, 35b) Führungsflächen (63a, 63b) ausgebildet sind, welche mit entsprechenden Führungsflächen des Schutzelements (67a, 67b) zusammenwirken.

9. Energieträgerkupplung nach einem der Ansprüche 1 bis 8, **dadurch gekennzeichnet, dass** ein Aktuator (7) vorgesehen ist, um das erste Energiekupplungsteil (5) von der ersten in die zweite Position zu verschieben, und vice versa.

10. Kupplung für den Anbau von Arbeitsgeräten an eine Arbeitsmaschine mit einer Energieträgerkupplung gemäss einem der Ansprüche 1 bis 9.

11. Kupplung nach Anspruch 10, weiter **gekennzeichnet durch**
- einen ersten Hauptkupplungsteil (1), an welchem das erste Energiekupplungsteil (5) angeordnet ist,
- einen zweiten Hauptkupplungsteil (2), an welchem das zweite Energiekupplungsteil (6) angeordnet ist, und
- einen Aktuator (7) zum Verschieben des ersten Energiekupplungsteils (5).

12. Kupplung nach Anspruch 10 oder 11, **dadurch gekennzeichnet, dass** der Aktuator (7) ein bewegliches Schiebeteil (8) antreibt, welches mit dem ersten Energiekupplungsteil (5) mechanisch in Verbindung steht.

13. Kupplung nach einem der Ansprüche 10 bis 12, **dadurch gekennzeichnet, dass** die Verschieberichtung des Energiekupplungsteils (26) in einem Winkel zur Verschieberichtung des Schiebeteils (25) erfolgt.

14. Kupplung nach einem der Ansprüche 10 bis 13, **dadurch gekennzeichnet,**
- **dass** das erste Hauptkupplungsteil (1) zwei in Abstand voneinander angeordnete Seitenteile (35a, 35b) umfasst, an denen auf einer Seite eine Bolzenaufnahme (11) für einen ersten Bolzen (10b) eines Arbeitsgeräts (4) ausgebildet ist, und
- **dass** zwischen dem durch die Seitenteile (35a, 35b) definierten Raum der Aktuator (7) angeordnet ist, welcher eine bewegliche Verriegelungseinrichtung (8) antreibt, die in Eingriff mit einem zweiten Bolzen (10a) des Arbeitsgeräts (4) gebracht werden kann.

15. Kupplung nach einem der Ansprüche 10 bis 14, **dadurch gekennzeichnet, dass** das Schiebeteil mit der beweglichen Verriegelungseinrichtung (8) verbunden ist.

16. Kupplung nach Anspruch 15, **dadurch gekennzeichnet, dass** das Schiebeteil als Schiebekeil (20) ausgebildet ist, welcher mit einer Führungsfläche (22) des ersten Kupplungsteiles (5) zur Erzeugung einer zwangsgeführten Bewegung zusammenwirkt.

## Claims

1. Power source coupling for connecting two power coupling parts, comprising
- a first power coupling part (5) which is mounted on a first component (1) so as to be longitudinally displaceable, and has a first connecting plate (16) with one or more first power coupling elements (18),
- a second power coupling part (6) which is mounted on a second component (4) so as to be displaceably mounted between a first and a second position, and has a second connecting plate (17) with one or more second power coupling elements (19) which are able to cooperate with the first power coupling elements (18) when the first power coupling part (5) is in the first position, and
- mutually cooperating guiding and centering means which are provided on the components (1, 4) and/or connecting plates (16, 17) to align the connecting plates (16, 17) relative to one another,
**characterized in that**
a protective element (51) is provided on the first power coupling part (5) so as to be adjustable in position, and which in the first position of the power coupling part (5) covers the first power coupling elements (18) when the second power coupling part (6) is not attached, and in the second position of the power coupling part (5) is in an open position.

2. Power source coupling according to Claim 1, **characterized in that** the protective element (51) is situated on the first power coupling part (5) so as to be pivotable about a rotational axis (54).

3. Power source coupling according to Claim 1 or 2, **characterized in that** forced guidance of the protective element (51) is provided which causes the protective element (51) to be swiveled or displaced from the first to the second position when the first power coupling part (5) is displaced.

4. Power source coupling according to one of Claims 1 through 3, **characterized in that** the protective element (51) is pretensioned in the first position by a spring means (55).

5. Power source coupling according to Claim 3 or 4, **characterized in that** the forced guidance is provided by guide surfaces (63a, 63b and 67a, 67b) situated on the first component (1) and on the protective element (51).

6. Power source coupling according to one of Claims 1 through 5, **characterized in that** the component has two interspaced side parts (35a, 35b), between which the first power coupling part (5) is guided in a longitudinally displaceable manner.

7. Power source coupling according to Claim 6, **characterized in that** the forced guidance is realized by a change in position of the movable protective element (51) relative to the stationary side parts (35a, 35b).

8. Power source coupling according to Claim 6 or 7, **characterized in that** guide surfaces (63a, 63b) are provided on the stationary side parts (35a, 35b) which cooperate with corresponding guide surfaces on the protective element (67a, 67b).

9. Power source coupling according to one of Claims 1 through 8, **characterized in that** an actuator (7) is provided to displace the first power coupling part (5) from the first to the second position, and vice versa.

10. Coupling for mounting tools to a machine having a power source coupling according to one of Claims 1 through 9.

11. Coupling according to Claim 10, further **characterized by**
- a first main coupling part (1) on which the first power coupling part (5) is situated,
- a second main coupling part (2) on which the second power coupling part (6) is situated, and
- an actuator (7) for displacing the first power coupling part (5).

12. Coupling according to Claim 10 or 11, **characterized in that** the actuator (7) drives a movable sliding part (8) which is in mechanical connection with the first power coupling part (5).

13. Coupling according to one of Claims 10 through 12, **characterized in that** the direction of displacement of the power coupling part (26) is at an angle relative to the direction of displacement of the sliding part (25).

14. Coupling according to one of Claims 10 through 13, **characterized in that**
- the first main coupling part (1) includes two interspaced side parts (35a, 35b) on which a pin receptacle (11) for a first pin (10b) of a tool (4) is provided on one side, and
- the actuator (7) which drives a movable locking device (8), which may be brought into engagement with a second pin (10a) of the tool (4), is provided in the space defined between the side parts (35a, 35b).

15. Coupling according to one of Claims 10 through 14, **characterized in that** the sliding part is connected to the movable locking device (8).

16. Coupling according to Claim 15, **characterized in that** the sliding part is designed as a spline (20) which cooperates with a guide surface (22) of the first coupling part (5) to produce a forcibly guided motion.

## Revendications

1. Couplage de support d'énergie pour coupler deux pièces de couplage d'énergie avec
- une première pièce de couplage d'énergie (5) qui est placée déplaçable dans le sens de la longueur entre une première position et une seconde position sur un premier composant (1) et une première plaque de raccordement (16) avec un ou plusieurs éléments de couplage d'énergie (18),
- une seconde pièce de couplage d'énergie (6) qui est placée sur un second composant (4) et une seconde plaque de raccordement (17) avec un ou plusieurs seconds éléments de couplage d'énergie (19) qui peuvent coopérer avec les premiers éléments de couplage d'énergie (18) au cas où la première pièce de couplage d'énergie (5) est dans la première position et
avec des moyens de guidage et de centrage qui coopèrent l'un avec l'autre qui sont prévus sur les composants (1, 4) et/ou les plaques de raccordement (16, 17) pour orienter les plaques de raccordement (16, 17) l'une par rapport à l'autre,
**caractérisé en ce**
**qu'**un élément de protection (51) est placé modifiable en position sur la première pièce de couplage d'énergie (5), élément de protection qui, dans la première position de la première pièce de couplage d'énergie (5), couvre les premiers éléments de couplage d'énergie (18) au cas où la seconde pièce de couplage d'énergie (6) n'est pas accouplée et se trouve dans la seconde position de la pièce de couplage d'énergie (5) dans une position ouverte.

2. Couplage de support d'énergie selon la revendication 1, **caractérisé en ce que** l'élément de protection (51) est placé pivotant autour d'un axe de rotation (54) sur la première pièce de couplage d'énergie (5).

3. Couplage de support d'énergie selon la revendication 1 ou 2, **caractérisé en ce qu'**il est prévu un guidage forcé de l'élément de protection (51) qui fait que l'élément de protection (51) est pivoté ou déplacé lors du déplacement de la première pièce de couplage d'énergie (5) de la première à la seconde position.

4. Couplage de support d'énergie selon l'une des revendications 1 à 3, **caractérisé en ce que** l'élément de protection (51) est précontraint dans la première position par un moyen à ressort (55).

5. Couplage de support d'énergie selon la revendication 3 ou 4, **caractérisé en ce que** le guidage forcé est formé par des surfaces de guidage (63a, 63b et 67a, 67b) configurées sur le premier composant (1) et sur l'élément de protection (51).

6. Couplage de support d'énergie selon l'une des revendications 1 à 5, **caractérisé en ce que** le composant possède deux parties latérales (35a, 35b) espacées l'une de l'autre entre lesquelles la première pièce de couplage d'énergie (5) est guidée déplaçable dans le sens de la longueur.

7. Couplage de support d'énergie selon la revendication 6, **caractérisé en ce que** le guidage forcé se fait par une modification de position de l'élément de protection mobile (51) par rapport aux parties latérales stationnaires (35a, 35b).

8. Couplage de support d'énergie selon la revendication 6 ou 7, **caractérisé en ce que** des surfaces de guidage (63a, 63b) sont configurées sur les parties latérales stationnaires (35a, 35b), surfaces de guidage qui coopèrent avec des surfaces de guidage correspondantes de l'élément de protection (67a, 67b).

9. Couplage de support d'énergie selon l'une des revendications 1 à 8, **caractérisé en ce qu'**un actionneur (7) est prévu pour déplacer la première pièce de couplage d'énergie (5) de la première à la seconde position et vice-versa.

10. Couplage pour l'ajout d'outillages à une machine de travail avec un couplage de support d'énergie selon l'une des revendications 1 à 9.

11. Couplage selon la revendication 10, **caractérisé de plus par**
- une première pièce de couplage principal (1) sur laquelle la première pièce de couplage d'énergie (5) est placée,
- une seconde pièce de couplage principal (2) sur laquelle la seconde pièce de couplage d'énergie (6) est placée et
- un actionneur (7) pour déplacer la première pièce de couplage d'énergie (5).

12. Couplage selon la revendication 10 ou 11, **caractérisé en ce que** l'actionneur (7) entraîne une pièce coulissante mobile (8) qui est en relation mécanique avec la première pièce de couplage d'énergie (5).

13. Couplage selon l'une des revendications 10 à 12, **caractérisé en ce que** le sens de déplacement de la pièce de couplage d'énergie (26) se fait dans un angle par rapport au sens de déplacement de la pièce coulissante (25).

14. Couplage selon l'une des revendications 10 à 13, **caractérisé en ce**
- **que** la première pièce de couplage principal (1) comprend deux parties latérales (35a, 35b) placées espacées l'une de l'autre, parties latérales sur lesquelles un logement de boulon (11) pour un premier boulon (10b) d'un outillage (4) est configuré sur un côté et
- **que** l'actionneur (7) est placé entre l'espace défini par les parties latérales (35a, 35b), actionneur qui entraîne un dispositifmobile de verrouillage (8) qui peut être mis en prise avec un second boulon (10a) de l'outillage (4).

15. Couplage selon l'une des revendications 10 à 14, **caractérisé en ce que** la pièce coulissante est reliée au dispositif mobile de verrouillage (8).

16. Couplage selon la revendication 15, **caractérisé en ce que** la pièce coulissante est configurée comme clavette coulissante (20) qui coopère avec une surface de guidage (22) de la première pièce de couplage (5) pour générer un mouvement guidé par force.
